# EUROPÄISCHE PATENTSCHRIFT

(11) **EP 3 388 385 B1**
(45) Veröffentlichungstag und Bekanntmachung des Hinweises auf die Patenterteilung: **08.09.2021**
(21) Anmeldenummer: 17166255.4
(22) Anmeldetag: 12.04.2017
(51) Int. Cl.: B66C 23/86, B66C 23/00, B66C 3/00

(54) **ROTATIONSANTRIEB**
ROTATION DRIVE
ENTRAÎNEMENT ROTATIF

(43) Veröffentlichungstag der Anmeldung: 17.10.2018
(73) Patentinhaber: EPSILON Kran GmbH., 5020 Salzburg (AT)
(72) Erfinder: STEINDL, Johannes, 5061 Elsbethen (AT)
(74) Vertreter: Torggler & Hofinger Patentanwälte

(56) Entgegenhaltungen:
- EP-A1- 2 460 758
- EP-A1- 2 460 758
- EP-A1- 3 504 145
- WO-A1-2016/099372

## Beschreibung

Die Erfindung betrifft einen hydraulischen Rotationsantrieb mit den Merkmalen des Oberbegriffs des Anspruchs 1.

Bei gattungsgemäßen Rotationsantrieben, wie sie zum Beispiel bei Kränen zur rotierbaren Montage von Lastaufnahmemitteln zum Einsatz kommen, stellt sich die Erfassung der Drehstellung des Rotationsantriebs oft als schwierig dar. Die Drehstellung des Rotationsantriebs muss dabei beispielsweise durch einen Benutzer optisch erfolgen, was auch freie Einsicht auf den Rotationsantrieb bzw. freie Zugänglichkeit zum Rotationsantrieb voraussetzen kann. Dies kann sich negativ auf den Montagevorgang eines Lastaufnahmemittels am Rotationsantrieb sowie auf die Bedienung eines an einem Kran über einen herkömmlichen Rotationsantrieb montierten Lastaufnahmemittels auswirken.

Die EP 2 460 758 A1 zeigt einen gattungsgemäßen Rotationsantrieb.

Die WO 2016/099372 A1 zeigt einen Rotator mit einer Vorrichtung zur Bestimmung der Drehstellung des Rotators, wobei die Vorrichtung einen den Rotator umschließenden Magnetring und einen Sensor aufweist.

Die EP 3 504 145 A1 ist Stand der Technik nach Artikel 54(3) EPÜ. Sie zeigt einen hydraulischen Drehantrieb mit einem Rotor und einem Stator, sowie einem Winkelsensor zur Erfassung einer Winkelstellung des Rotors zum Stator. In der Welle ist eine Ausnehmung vorgesehen, in welcher der Winkelsensor teilweise aufgenommen ist.

Aufgabe der Erfindung ist es, einen verbesserten Rotationsantrieb anzugeben, bei welchem die zuvor genannten Nachteile nicht auftreten.

Diese Aufgabe wird durch einen Rotationsantrieb mit den Merkmalen des Anspruchs 1 gelöst. Vorteilhafte Ausführungsformen der Erfindung sind in den abhängigen Ansprüchen definiert.

Wie bei einem gattungsgemäßen weist auch der erfindungsgemäße hydraulische Rotationsantrieb zum Rotieren eines Lastaufnahmemittels relativ zu einem Kranarm zunächst eine Welle auf, welche selbst wiederum erste Befestigungsmittel zum Verbinden der Welle mit dem Lastaufnahmemittel oder dem Kranarm aufweist. Weiter ist ein Wellenlager vorgesehen, welches zweite Befestigungsmittel zum Verbinden des Wellenlagers mit dem Kranarm oder dem Lastaufnahmemittel aufweist. Zum Antrieb des Rotationsantriebs sind in der Welle angeordnete Flügel vorgesehen, die zur Übertragung eines Drehmoments auf die Welle über eine Ölzuführung und eine Ölabführung mit Öl beaufschlagbar sind. Der hydraulische Rotationsantrieb kann allgemein über eine Hydraulikeinrichtung betrieben werden, die meist von einem Kranarm zum Rotationsantrieb führt.

Der erfindungsgemäße hydraulische Rotationsantrieb weist zusätzlich einen Drehgeber auf, welcher der Erfassung der Drehstellung der Welle relativ zum Wellenlager dient. Die Drehstellung des Rotationsantriebs und gegebenenfalls eines an diesem befestigten Lastaufnahmemittels kann so einfach und genau erfasst werden.

Als ein Drehgeber, auch Drehwinkelgeber genannt, kann dabei ein mechanischer oder elektrischer Sensor zur Erfassung eines Drehwinkels verstanden werden. Ein solcher Sensor kann einen Rotor und einen Stator aufweisen und ein analoges und/oder digitales Ausgangssignal generieren bzw. ausgeben, welches einer Drehstellung des Rotor relativ zum Stator proportional ist.

Es ist vorgesehen, dass in der Welle und/oder im Wellenlager zumindest eine Ausnehmung vorgesehen ist, in welcher der Drehgeber zumindest teilweise aufgenommen ist. Dadurch kann der Drehgeber in einem von der Welle bzw. dem Wellenlager geschützten Bereich angeordnet werden und so Beschädigungen am Drehgeber durch mechanische Einwirkung von außen vermieden werden. Auch lässt sich durch eine zumindest teilweise Anordnung des Drehgebers in der Welle bzw. im Wellenlager eine kompakte Bauform des Rotationsantriebs ermöglichen.

Es ist vorgesehen, dass der Rotationsantrieb eine Gleitkontaktiervorrichtung aufweist, die mit einer Stromzuführung und einer Stromabführung elektrisch kontaktiert ist. Dadurch kann ein am Rotationsantrieb angeordneter elektrischer Verbraucher, wie beispielsweise ein elektrisch betriebenes Lastaufnahmemittel oder elektrisch betriebenes Arbeitsgerät, mit elektrischer Energie versorgt werden. Auch kann die Gleitkontaktiervorrichtung der drehbaren Durchführung von Signalleitungen dienen.

Dabei kann vorteilhaft sein, dass der Drehgeber und die Gleitkontaktiervorrichtung als eine gemeinsame Baueinheit ausgebildet sind. Dadurch kann sich eine kompakte Bauform erzielen lassen, welche einfach im bzw. am Rotationsantrieb anordenbar ist.

Weiter kann dabei von Vorteil sein, dass in der Welle eine erste Ausnehmung zur zumindest teilweisen Anordnung des Drehgebers bzw. der Gleitkontaktiervorrichtung und im Wellenlager eine zweite Ausnehmung zur zumindest teilweisen Anordnung des Drehgebers bzw. der Gleitkontaktiervorrichtung vorgesehen ist. So kann beispielsweise der Drehgeber zumindest teilweise in der zweiten Ausnehmung angeordnet und die Gleitkontaktiervorrichtung zumindest teilweise in der ersten Ausnehmung angeordnet sein. Der umgekehrte Fall ist ebenso denkbar.

Im Fall der Anordnung einer Ausnehmung in der Welle kann vorteilhaft sein, dass die zumindest eine Ausnehmung an einem dem Kranarm zugewandten oder abgewandten Ende der Welle angeordnet ist. So kann die zumindest eine Ausnehmung beispielsweise als eine axial in eine der Stirnflächen der Welle eingebrachte Materialaussparung ausgeführt werden.

Es kann von Vorteil sein, dass der Drehgeber und/oder die Gleitkontaktiervorrichtung im Wesentlichen vollständig in der zumindest einen Ausnehmung aufgenommen ist bzw. sind. Dadurch kann eine platzsparende Anordnung des Drehgebers bzw. der Gleitkontaktiervorrichtung innerhalb des Rotationsantriebs und guter Schutz gegen äußere mechanische Einflüsse erreicht werden.

Es kann grundsätzlich möglich sein, dass die Übertragung der vom Drehgeber erfassten Drehstellung zu einer Erfassungseinrichtung kabelgebunden oder drahtlos erfolgt. Gegebenenfalls kann auch eine elektrische Versorgung des Drehgebers kabelgebunden oder drahtlos (beispielsweise induktiv) erfolgen.

Es kann weiter von Vorteil sein, dass die Stromzuführung zur Gleitkontaktiervorrichtung im Wesentlichen axial in der Welle verläuft und/oder im Wellenlager im Wesentlichen radial verläuft oder umgekehrt. So kann beispielsweise bei einer Anordnung der Gleitkontaktiervorrichtung im Wellenlager deren Stromzuführung im Bereich des Wellenlagers radial (also beispielsweise seitlich) oder axial (also beispielsweise von oben) verlaufen. Bei einer Anordnung der Gleitkontaktiervorrichtung in bzw. an einem Ende der Welle kann deren Stromzuführung im Bereich des Wellenlagers radial oder axial verlaufen und in der Welle selbst axial (also beispielsweise entlang der Längserstreckung der Welle) oder radial verlaufen.

Dabei kann vorteilhaft sein, dass die Stromzuführung zur Gleitkontaktiervorrichtung im Drehgeber im Wesentlichen axial und/oder radial verläuft. Bei einer Anordnung des Drehgeber in bzw. am Wellenlager oder in bzw. an der Welle kann die Stromzuführung zur Gleitkontaktiervorrichtung den Drehgeber durchqueren, wobei dies in axialer und/oder radialer Richtung erfolgen kann.

Es kann grundsätzlich von Vorteil sein, wenn die Welle an einem dem Lastaufnahmemittel zugewandten Ende des Rotationsantriebs über das Wellenlager vorsteht. Dadurch können sich beispielsweise Befestigungsmittel zum Verbinden der Welle mit dem Lastaufnahmemittel leicht erreichen lassen.

Es kann weiter von Vorteil sein, dass die Stromabführung von der Gleitkontaktiervorrichtung an dem dem Lastaufnahmemittel zugewandten Ende des Rotationsantriebs ausgebildet ist und vorzugsweise vom Rotationsantrieb seitlich wegführt.

Dabei kann vorteilhaft sein, dass die seitliche Stromabführung von der Gleitkontaktiervorrichtung im Wesentlichen radial wegführt oder schräg in Richtung des dem Lastaufnahmemittel zugewandten Ende des Rotationsantriebs verläuft.

Es kann vorgesehen sein, dass die Welle als Rotor und das Wellenlager als Stator ausgebildet ist. Das Wellenlager kann so relativ zum Kranarm als drehfest ausgebildet sein und die Welle und gegebenenfalls ein daran angeordnetes Lastaufnahmemittel relativ zum feststehenden Wellenlager rotiert werden.

Es kann vorteilhaft sein, dass zumindest ein Teil des Drehgebers am Wellenlager befestigt ist und zumindest ein Teil des Drehgebers an der Welle befestigt ist. So kann ein Teil des Drehgebers relativ zum Wellenlager festgelegt werden und ein Teil des Drehgebers relativ zur Welle festgelegt werden. So kann sich durch eine Rotation der Welle relativ zum Wellenlager eine Rotation der betreffenden Teile des Drehgebers zueinander ergeben und folglich erfassen lassen.

Schutz wird auch begehrt für einen Kran mit einem wie zuvor beschriebenen hydraulischen Rotationsantrieb zum Rotieren eines Lastaufnahmemittels relativ zu einem Kranarm, wobei der Kranarm mit dem zweiten Befestigungsmittel des hydraulischen Rotationsantriebs verbunden ist.

Auch wird Schutz begehrt für einen Harvester, auch Holzvollernter, Waldvollernter oder Kranvollernter genannt, mit einem wie zuvor beschriebenen Kran begehrt.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine Schnittdarstellung einer ersten Ausführung eines Rotationsantriebs,
- Fig. 2: eine weitere Schnittdarstellung der Ausführung des Rotationsantriebs der Figur 1,
- Fig. 3: eine Schnittdarstellung einer zweiten Ausführung eines Rotationsantriebs,
- Fig. 4: eine Schnittdarstellung einer dritten Ausführung eines Rotationsantriebs,
- Fig. 5: eine Schnittdarstellung einer vierten Ausführung eines Rotationsantriebs,
- Fig. 6: eine Schnittdarstellung einer fünften Ausführung eines Rotationsantriebs,
- Fig. 7: einen Harvester mit einem Rotationsantrieb,
- Fig. 8: eine Seitenansicht eines Krans, und
- Fig. 9: eine Seitenansicht eines Fahrzeugs mit einem Kran.

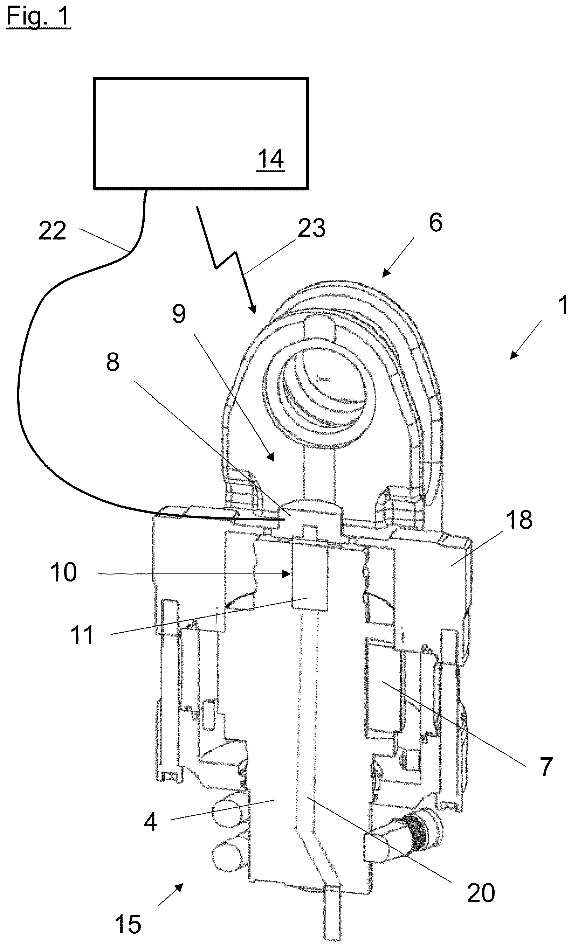

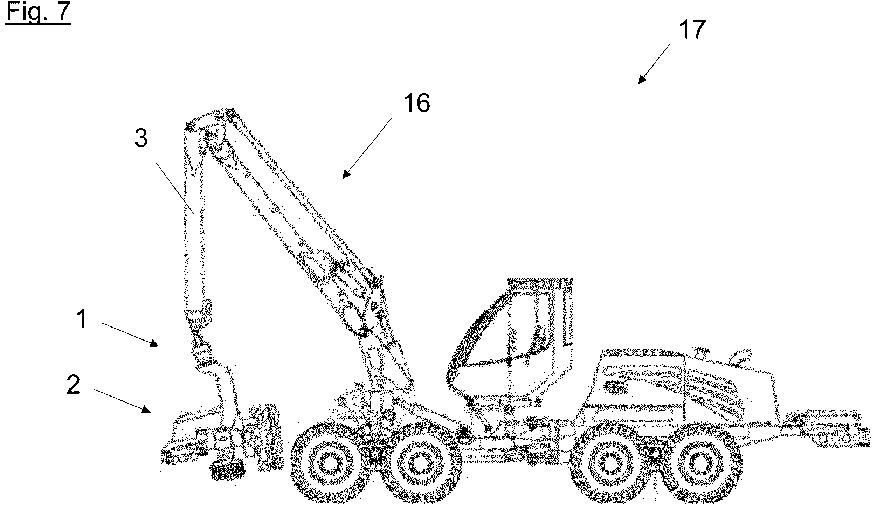

In Figur 1 ist ein Schnitt durch eine erste Ausführung eines Rotationsantriebs 1 gezeigt. Dabei sind die laschenförmig ausgebildeten zweiten Befestigungsmittel 6 erkennbar, mit welchen der Rotationsantrieb 1 beispielsweise an einem Kranarm 3 (hier nicht dargestellt, siehe Figur 7) befestigbar ist. Im Wellenlager 18 ist eine drehbare Welle 4 angeordnet, welche zum Antrieb der Welle 4 mit Hydrauliköl beaufschlagbare Flügel 7 aufweist. Die Welle 7 steht an einem unteren Ende 15 des Rotationsantriebs 1 aus dem Wellenlager 18 vor. Im Wellenlager 18 ist eine erste Ausnehmung 9 vorgesehen, in welcher ein Drehgeber 8 angeordnet ist. In der gezeigten Ausführung ist der Drehgeber 8 im Wesentlichen vollständig in der ersten Ausnehmung 9 angeordnet. Weiter ist in der gezeigten Ausführung die erste Ausnehmung 9 im Wesentlichen zwischen den laschenförmig ausgebildeten zweiten Befestigungsmitteln 6 ausgebildet. An einem den zweiten Befestigungsmitteln 6 zugewandten (wie dargestellt oberen) Ende der Welle 4 ist eine zweite Ausnehmung 10 eingebracht, in welcher eine Gleitkontaktiervorrichtung 11 angeordnet ist. In der gezeigten Ausführung ist die Gleitkontaktiervorrichtung 11 im Wesentlichen vollständig in der zweiten Ausnehmung 10 angeordnet. Zur Leitungsführung von Signalleitungen und/oder Versorgungsleitungen sind im Wellenlager 18 sowie in der Welle 4 entsprechende Ausnehmungen vorgesehen. In Figur 1 ist dabei eine Ausnehmung in Form des Kabelkanals 20 in der Welle 4, welcher wie dargestellt zumindest abschnittsweise im Wesentlichen axial in der Welle 4 verläuft, erkennbar. Weiter ist in Figur 1 schematisch eine Erfassungseinrichtung 14 zur Erfassung der vom Drehgeber 8 ausgegebenen Sensorsignale dargestellt. Die Kommunikation des Drehgeber 8 mit der Erfassungseinrichtung 14, welche beispielsweise in einer Kransteuerung integriert sein kann, kann kabelgebunden über eine Signalleitung 22 und/oder drahtlos über eine Funkverbindung 23 (wie etwa über Bluetooth, über eine Funkverbindung nach einem Standard der IEEE-802.11-Familie oder Ähnliches) erfolgen. Der Drehgeber 8 sowie die Erfassungseinrichtung 14 können dabei über entsprechende Funkmodule verfügen.

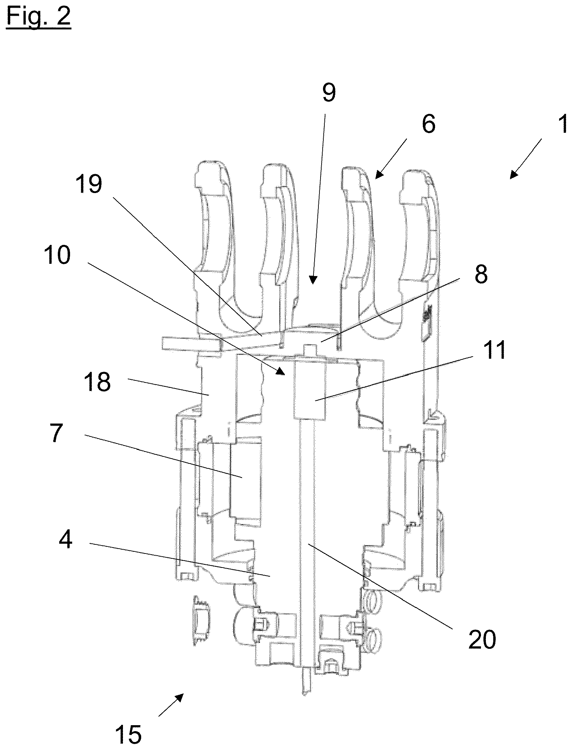

In Figur 2 ist eine weitere Schnittdarstellung der in Figur 1 gezeigten Ausführung des Rotationsantriebs 1 gezeigt. Die Schnittebene der in Figur 2 gezeigten Darstellung ist im Vergleich zur Figur 1 im Wesentlichen um 90° gedreht verlaufend. Dadurch ist unter anderem die Ausnehmung in Form des Kabelkanals 19 im Wellenlager 18, welcher wie dargestellt im Wesentlichen radial im Wellenlager 18 verläuft, erkennbar.

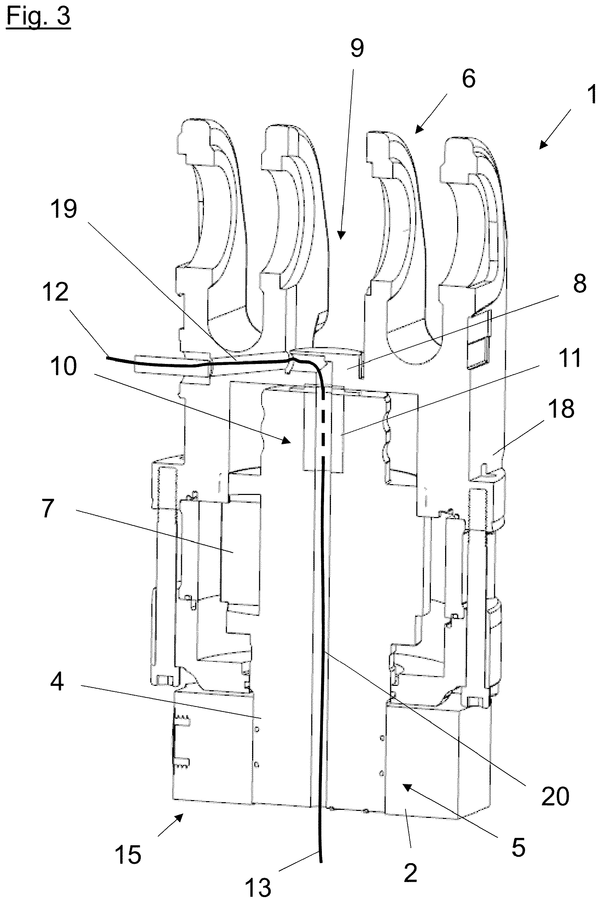

In Figur 3 ist eine zweite Ausführung eines Rotationsantriebs 1 gezeigt. In der gezeigten Ausführung weist das Wellenlager 18 wieder eine erste Ausnehmung 9 auf, in welcher ein Drehgeber 8 angeordnet ist. Die Welle 4 weist an ihrem den zweiten Befestigungsmitteln 6 zugewandten Ende eine zweite Ausnehmung 10 auf, in welcher eine Gleitkontaktiervorrichtung 11 angeordnet ist. Der Kabelkanal 19 verläuft in der in Figur 2 gezeigten Ausführung im Wellenlager 18 im Wesentlichen radial und mündet auch im Wesentlichen radial in den Drehgeber 8 ein. In der Welle 4 verläuft der axiale Kabelkanal 20, welcher von der Welle 4 kommend auch axial in den Drehgeber 8 einmündet. Die Stromzuführung 12 zur Gleitkontaktiervorrichtung 11 verläuft somit im Wellenlager 18 im Wesentlichen radial und im Drehgeber 8 abschnittsweise radial und abschnittsweise axial. Im Kabelkanal 20 der Welle 4 ist die Stromabführung 13 im Wesentlichen axial verlaufend. Am unteren Ende 15 des Rotationsantriebs 1 ist an die aus dem Wellenlager 18 vorstehende Welle 4 ein Teil eines über erste Befestigungsmittel 5 befestigten Lastaufnahmemittels 2 (siehe dazu auch Figur 7) gezeigt. Die Stromabführung 13 tritt aus dem den ersten Befestigungsmitteln 5 zugewandten (wie dargestellt unteren) Ende der Welle 4 im Wesentlichen axial aus.

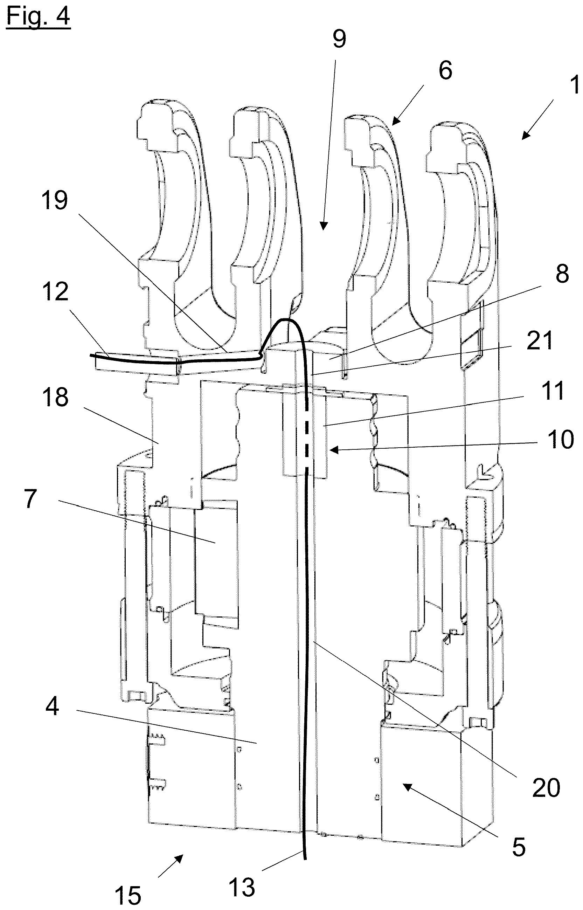

In Figur 4 ist eine dritte Ausführung eines Rotationsantriebs 1 gezeigt. In der gezeigten Ausführung weist das Wellenlager 18 wieder eine erste Ausnehmung 9 auf, in welcher ein Drehgeber 8 angeordnet ist. Die Welle 4 weist an ihrem den zweiten Befestigungsmitteln 6 zugewandten Ende eine zweite Ausnehmung 10 auf, in welcher eine Gleitkontaktiervorrichtung 11 angeordnet ist. Weiter ist in Figur 4 dargestellt, dass die Stromzuführung 12 der Gleitkontaktiervorrichtung 11 im Wellenlager 18 im Wesentlichen radial verläuft und weiter den Drehgeber 8 durch eine entsprechende axiale Durchführung 21 axial durchquert. Die Stromabführung 13 der Gleitkontaktiervorrichtung 11 verläuft wie dargestellt in der Welle 4 im Kabelkanal 20 im Wesentlichen axial. Die Stromabführung 13 tritt aus dem den ersten Befestigungsmitteln 5 zugewandten Ende der Welle 4 im Wesentlichen axial aus.

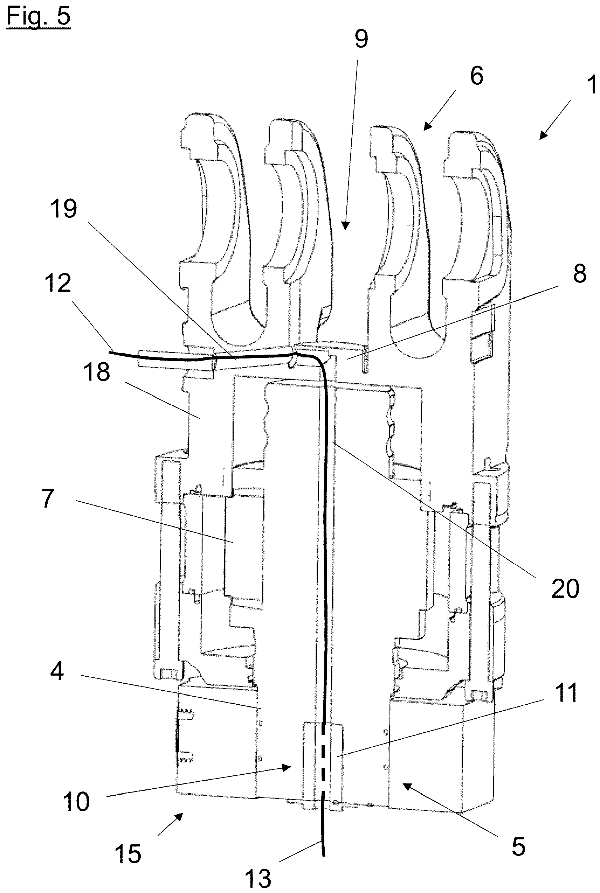

In Figur 5 ist eine vierte Ausführung eines Rotationsantriebs 1 gezeigt, welche sich im Wesentlichen von der in Figur 3 gezeigten Ausführung dadurch unterscheidet, dass die Welle 4 an einem den zweiten Befestigungsmitteln 6 abgewandten bzw. den ersten Befestigungsmitteln 5 zugewandten Ende eine zweite Ausnehmung 10 aufweist, in welcher die Gleitkontaktiervorrichtung 11 angeordnet ist. Der Drehgeber 8 ist wieder in der ersten Ausnehmung 9 des Wellenlager 18 angeordnet. Der Kabelkanal 19 verläuft in der in Figur 5 gezeigten Ausführung im Wellenlager 18 im Wesentlichen radial und mündet auch im Wesentlichen radial in den Drehgeber 8 ein. In der Welle 4 verläuft der axiale Kabelkanal 20, welcher von der Welle 4 kommend auch axial in den Drehgeber 8 einmündet. Die Stromzuführung 12 zur Gleitkontaktiervorrichtung 11 verläuft somit im Wellenlager 18 radial und im Drehgeber 8 abschnittsweise radial und abschnittsweise axial. Im Kabelkanal 20 der Welle 4 ist die Stromzuführung 12 auch axial verlaufend. Die Stromabführung 13 tritt aus dem den ersten Befestigungsmitteln 5 zugewandten Ende der Welle 4 im Wesentlichen axial aus.

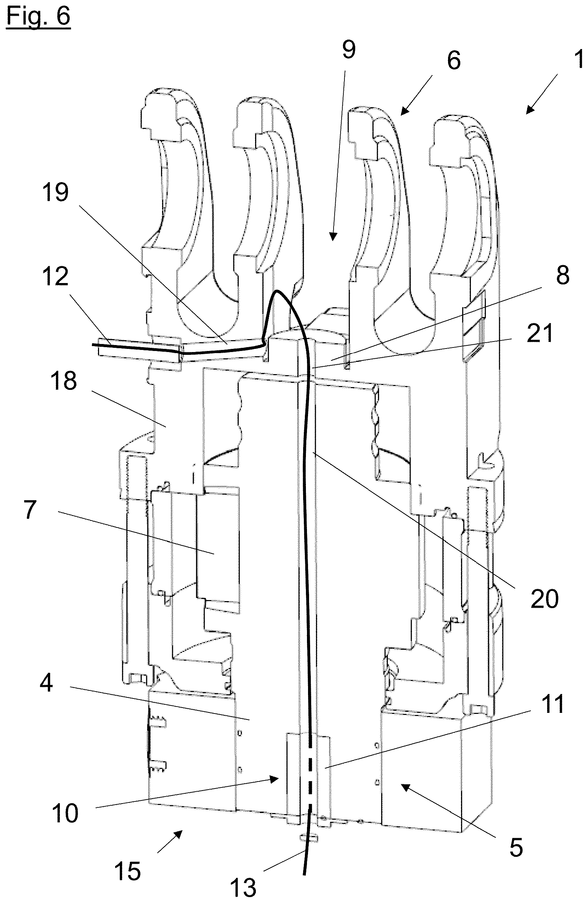

In Figur 6 ist eine fünfte Ausführung eines Rotationsantriebs 1 gezeigt welche sich im Wesentlichen von der in Figur 4 gezeigten Ausführung dadurch unterscheidet, dass die Welle 4 an einem den zweiten Befestigungsmitteln 6 abgewandten bzw. den ersten Befestigungsmitteln 5 zugewandten Ende eine zweite Ausnehmung 10 aufweist, in welcher die Gleitkontaktiervorrichtung 11 angeordnet ist.. Wie in der Figur 4 weist der Drehgeber 8 eine radiale Durchführung 21 auf. Die Stromzuführung 12 zur Gleitkontaktiervorrichtung 11 verläuft vom im Wesentlichen durch das Wellenlager 18 radial verlaufenden Kabelkanal 19 kommend axial durch den Drehgeber 8 hindurch und läuft durch den im Wesentlichen axial durch die Welle 4 verlaufenden Kabelkanal 20 zur wie dargestellt am unteren Ende der Welle 4 angeordneten Gleitkontaktiervorrichtung 11. Die Stromabführung 13 tritt aus dem den ersten Befestigungsmitteln 5 zugewandten Ende der Welle 4 im Wesentlichen axial aus.

In Figur 7 ist eine Seitenansicht eines Harvesters 17, auch Holzvollernter, Waldvollernter oder Kranvollernter genannt, gezeigt. Der Harvester 17 weist einen Kran 16 mit einem äußeren Kranarm 3 auf. An der Kranspitze des Kranarms 3 ist ein Rotationsantrieb 1 angeordnet, an welchem ein Lastaufnahmemittel 2 befestigt ist. Durch den hydraulischen Rotationsantrieb 1 kann das Lastaufnahmemittel 2 relativ zum Kranarm 3 rotiert werden.

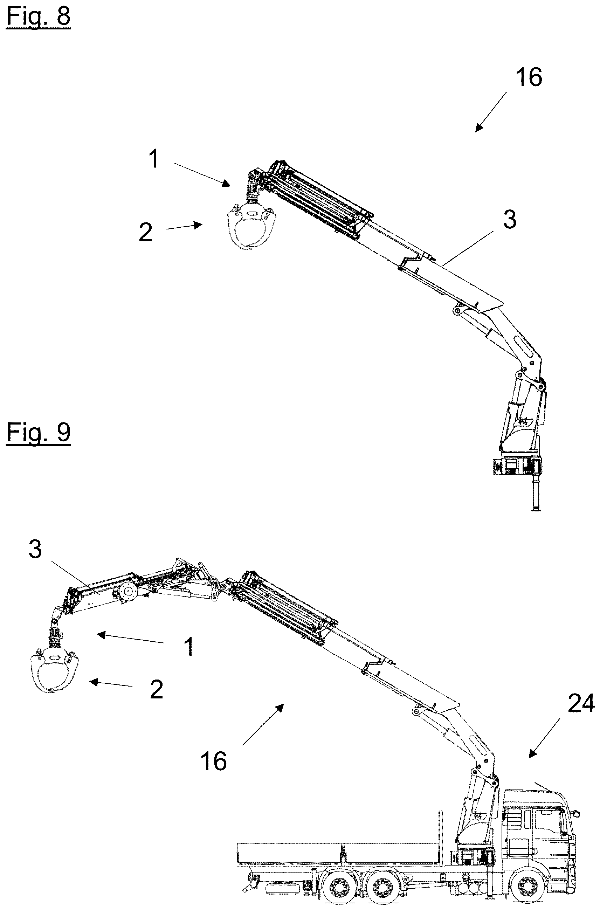

In Figur 8 ist eine Seitenansicht einer weiteren Ausführung eines Krans 16 gezeigt, wobei strukturell und funktionell ähnliche Elemente die gleichen Bezugszeichen aufweisen, wie in der zuvor gezeigten Ausführung. In der in Figur 8 gezeigten Ausführung ist an einem teleskopierbaren Kranarm 3 über einen Rotationsantrieb 1 ein als Greifer ausgebildetes Lastaufnahmemittel 2 angeordnet.

In Figur 8 ist ein Fahrzeug 24 mit einer als Ladekran ausgebildeten weiteren Ausführung eines Krans 16 gezeigt, wobei strukturell und funktionell ähnliche Elemente die gleichen Bezugszeichen aufweisen, wie in den zuvor gezeigten Ausführungen. An einem als Vorsatzknickarm ausgebildeten Kranarm 3 des am Fahrzeug 24 angeordneten Krans 16 ist über einen Rotationsantrieb 1 ein als Greifer ausgebildetes Lastaufnahmemittel 2 angeordnet.

**Bezugszeichenliste:**

| | |
|---|---|
| Rotationsantrieb | 1 |
| Lastaufnahmemittel | 2 |
| Kranarm | 3 |
| Welle | 4 |
| erste Befestigungsmittel | 5 |
| zweite Befestigungsmittel | 6 |
| Flügel | 7 |
| Drehgeber | 8 |
| erste Ausnehmung | 9 |
| zweite Ausnehmung | 10 |
| Gleitkontaktiervorrichtung | 11 |
| Stromzuführung | 12 |
| Stromabführung | 13 |
| Erfassungseinrichtung | 14 |
| Ende Rotationsantrieb | 15 |
| Kran | 16 |
| Harvester | 17 |
| Wellenlager | 18 |
| Kabelkanal | 19 |
| Kabelkanal | 20 |
| axiale Durchführung | 21 |
| Signalleitung | 22 |
| Funkverbindung | 23 |
| Fahrzeug | 24 |

## Patentansprüche

1. Hydraulischer Rotationsantrieb (1) zum Rotieren eines Lastaufnahmemittels (2) relativ zu einem Kranarm (3), mit
- einer Welle (4), welche erste Befestigungsmittel (5) aufweist, zum Verbinden der Welle (4) mit dem Lastaufnahmemittel (2) oder dem Kranarm (3),
- einem Wellenlager (18), welches zweite Befestigungsmittel (6) aufweist, zum Verbinden des Wellenlagers (18) mit dem Kranarm (3) oder dem Lastaufnahmemittel (2),
- in der Welle (4) angeordnete Flügel (7), die zur Übertragung eines Drehmoments auf die Welle (4) über eine Ölzuführung und eine Ölabführung mit Öl beaufschlagbar sind,
**dadurch gekennzeichnet, dass** der Rotationsantrieb (1) einen Drehgeber (8) zur Erfassung der Drehstellung der Welle (4) relativ zum Wellenlager (18) aufweist, und dass in der Welle (4) und/oder im Wellenlager (18) zumindest eine Ausnehmung (9) vorgesehen ist, in welcher der Drehgeber (8) zumindest teilweise aufgenommen ist, wobei der Rotationsantrieb (1) eine Gleitkontaktiervorrichtung (11) aufweist, die mit einer Stromzuführung (12) und einer Stromabführung (13) elektrisch kontaktiert ist.

2. Rotationsantrieb nach Anspruch 1, wobei der Drehgeber (8) und die Gleitkontaktiervorrichtung (11) als eine gemeinsame Baueinheit ausgebildet sind.

3. Rotationsantrieb nach Anspruch 1, wobei in der Welle (4) eine erste Ausnehmung (9) und im Wellenlager (18) eine zweite Ausnehmung (10) vorgesehen ist und der Drehgeber zumindest teilweise in der zweiten Ausnehmung (10) angeordnet ist und die Gleitkontaktiervorrichtung (11) zumindest teilweise in der ersten Ausnehmung (9) angeordnet ist oder umgekehrt.

4. Rotationsantrieb nach einem der Ansprüche 1 bis 3, wobei die zumindest eine Ausnehmung (9) an einem dem Kranarm (3) zugewandten oder abgewandten Ende der Welle (4) angeordnet ist.

5. Rotationsantrieb nach einem der Ansprüche 1 bis 4, wobei der Drehgeber (8) und/oder die Gleitkontaktiervorrichtung (11) im Wesentlichen vollständig in der zumindest einen Ausnehmung (9, 10) aufgenommen ist bzw. sind.

6. Rotationsantrieb nach einem der vorangehenden Ansprüche, wobei die Übertragung der vom Drehgeber (8) erfassten Drehstellung zu einer Erfassungseinrichtung (14) kabelgebunden oder drahtlos erfolgt.

7. Rotationsantrieb nach einem der Ansprüche 1 bis 6, wobei die Stromzuführung (12) zur Gleitkontaktiervorrichtung (11) im Wesentlichen axial in der Welle (4) verläuft und/oder im Wellenlager (18) im Wesentlichen radial verläuft oder umgekehrt.

8. Rotationsantrieb nach Anspruch 7, wobei die Stromzuführung (12) zur Gleitkontaktiervorrichtung (11) im Drehgeber (8) im Wesentlichen axial oder radial verläuft.

9. Rotationsantrieb nach einem der vorangehenden Ansprüche, wobei die Welle (4) an einem dem Lastaufnahmemittel (2) zugewandten Ende (15) des Rotationsantriebs (1) über das Wellenlager (18) vorsteht.

10. Rotationsantrieb nach einem der vorangehenden Ansprüche, wobei die Welle (4) als Rotor und das Wellenlager (18) als Stator ausgebildet ist.

11. Rotationsantrieb nach einem der vorangehenden Ansprüche, wobei zumindest ein Teil des Drehgebers (8) am Wellenlager (18) befestigt ist und zumindest ein Teil des Drehgebers (8) an der Welle (4) befestigt ist.

12. Kran (16) mit einem hydraulischen Rotationsantrieb (1) zum Rotieren eines Lastaufnahmemittels (2) relativ zu einem Kranarm (3) nach einem der Ansprüche 1 bis 11, wobei der Kranarm (3) mit dem zweiten Befestigungsmittel (6) des hydraulischen Rotationsantriebs (1) verbunden ist.

13. Harvester (17) mit einem Kran (16) nach Anspruch 12.

## Claims

1. Hydraulic rotational drive (1) for rotating load-handling equipment (2) relative to a crane arm (3), with
- a shaft (4), which has first securing means (5) for connecting the shaft (4) to the load-handling equipment (2) or the crane arm (3),
- a shaft bearing (18), which has second securing means (6) for connecting the shaft bearing (18) to the crane arm (3) or the load-handling equipment (2),
- vanes (7) arranged in the shaft (4) which can be acted on by oil via an oil feed and an oil discharge for the transmission of a torque to the shaft (4),
**characterized in that** the rotational drive (1) has a rotary encoder (8) for the detection of the angular position of the shaft (4) relative to the shaft bearing (18), and that there is provided in the shaft (4) and/or in the shaft bearing (18) at least one recess (9), in which the rotary encoder (8) is at least partially received, wherein the rotational drive (1) has a sliding contact device (11), which is electrically contacted by a current supply line (12) and a current discharge line (13).

2. Rotational drive according to claim 1, wherein the rotary encoder (8) and the sliding contact device (11) are formed as a combined structural unit.

3. Rotational drive according to claim 1, wherein a first recess (9) is provided in the shaft (4) and a second recess (10) is provided in the shaft bearing (18) and the rotary encoder is arranged at least partially in the second recess (10) and the sliding contact device (11) is arranged at least partially in the first recess (9), or vice versa.

4. Rotational drive according to one of claims 1 to 3, wherein the at least one recess (9) is arranged on an end of the shaft (4) facing towards or facing away from the crane arm (3).

5. Rotational drive according to one of claims 1 to 4, wherein the rotary encoder (8) and/or the sliding contact device (11) is or are substantially completely received in the at least one recess (9, 10).

6. Rotational drive according to one of the preceding claims, wherein the transmission of the angular position detected by the rotary encoder (8) to a detection device (14) is effected via cables or wirelessly.

7. Rotational drive according to one of claims 1 to 6, wherein the current supply line (12) to the sliding contact device (11) runs substantially axially in the shaft (4) and/or runs substantially radially in the shaft bearing (18), or vice versa.

8. Rotational drive according to claim 7, wherein the current supply line (12) to the sliding contact device (11) runs substantially axially or radially in the rotary encoder (8).

9. Rotational drive according to one of the preceding claims, wherein, at an end (15) of the rotational drive (1) facing towards the load-handling equipment (2), the shaft (4) projects beyond the shaft bearing (18).

10. Rotational drive according to one of the preceding claims, wherein the shaft (4) is formed as a rotor and the shaft bearing (18) is formed as a stator.

11. Rotational drive according to one of the preceding claims, wherein at least one part of the rotary encoder (8) is secured to the shaft bearing (18) and at least one part of the rotary encoder (8) is secured to the shaft (4).

12. Crane (16) with a hydraulic rotational drive (1) for rotating load-handling equipment (2) relative to a crane arm (3) according to one of claims 1 to 11, wherein the crane arm (3) is connected to the second securing means (6) of the hydraulic rotational drive (1).

13. Harvester (17) with a crane (16) according to claim 12.

## Revendications

1. Entraînement rotatif hydraulique (1) destiné à la rotation d'un moyen de levage (2) par rapport à un bras de grue (3), doté
- d'un arbre (4), lequel comporte des premiers moyens de fixation (5), destinés à relier l'arbre (4) au moyen de levage (2) ou au bras de grue (3),
- d'un palier d'arbre (18), lequel comporte des deuxièmes moyens de fixation (6), destinés à relier le palier d'arbre (18) au bras de grue (3) ou au moyen de levage (2),
- d'ailettes (7) disposées dans l'arbre (4), lesquelles se voient appliquer une pression d'huile par le biais d'une arrivée d'huile et d'une d'évacuation d'huile afin de transmettre un couple à l'arbre (4),
**caractérisé en ce que** l'entraînement rotatif (1) comporte un capteur rotatif (8) destiné à saisir la position de rotation de l'arbre (4) par rapport au palier d'arbre (18), et **en ce qu'**au moins un évidement (9) est prévu dans l'arbre (4) et/ou dans le palier d'arbre (18), le capteur rotatif (8) étant logé au moins partiellement dans celui-ci, dans lequel l'entraînement rotatif (1) comporte un dispositif de contact glissant (11), lequel est en contact électrique avec une entrée de courant (12) et une sortie de courant (13).

2. Entraînement rotatif selon la revendication 1, dans lequel le capteur rotatif (8) et le dispositif de contact glissant (11) sont réalisés comme unité modulaire commune.

3. Entraînement rotatif selon la revendication 1, dans lequel un premier évidement (9) est prévu dans l'arbre (4) et un deuxième évidement (10) est prévu dans le palier d'arbre (18) et le capteur rotatif est au moins partiellement disposé dans le deuxième évidement (10) et le dispositif de contact glissant (11) est au moins partiellement disposé dans le premier évidement (9) ou l'inverse.

4. Entraînement rotatif selon l'une des revendications 1 à 3, dans lequel l'au moins un évidement (9) est disposé à une extrémité de l'arbre (4) tournée vers le bras de grue (3) ou se détournant de celui-ci.

5. Entraînement rotatif selon l'une des revendications 1 à 4, dans lequel le capteur rotatif (8) et/ou le dispositif de contact glissant (11) est ou sont accueilli(s) sensiblement en totalité dans l'au moins un évidement (9, 10).

6. Entraînement rotatif selon l'une des revendications précédentes, dans lequel la transmission au dispositif de saisie (14) de la position de rotation saisie par le capteur rotatif (8) s'effectue par liaison filaire ou sans fil.

7. Entraînement rotatif selon l'une des revendications 1 à 6, dans lequel l'entrée de courant (12) vers le dispositif de contact glissant (11) est sensiblement axiale dans l'arbre (4) et/ou est sensiblement radiale dans le palier d'arbre (18) ou l'inverse.

8. Entraînement rotatif selon la revendication 7, dans lequel l'entrée de courant (12) vers le dispositif de contact glissant (11) est sensiblement axiale ou radiale dans le capteur rotatif (8).

9. Entraînement rotatif selon l'une des revendications précédentes, dans lequel l'arbre (4) dépasse du palier d'arbre (18) à une extrémité (15) de l'entraînement rotatif (1) tournée vers le moyen de levage (2).

10. Entraînement rotatif selon l'une des revendications précédentes, dans lequel l'arbre (4) est réalisé comme rotor et le palier d'arbre (18) est réalisé comme stator.

11. Entraînement rotatif selon l'une des revendications précédentes, dans lequel au moins une partie du capteur rotatif (8) est fixée au palier d'arbre (18) et au moins une partie du capteur rotatif (8) est fixée à l'arbre (4).

12. Grue (16) dotée d'un entraînement rotatif hydraulique (1), destiné à la rotation d'un moyen de levage (2) par rapport à un bras de grue (3), selon l'une des revendications 1 à 11, dans laquelle le bras de grue (3) est relié au deuxième moyen de fixation (6) de l'entraînement rotatif hydraulique (1).

13. Abatteuse (17) dotée d'une grue (16) selon la revendication 12.
